# EUROPÄISCHE PATENTSCHRIFT

(11) **EP 2 121 258 B1**
(45) Veröffentlichungstag und Bekanntmachung des Hinweises auf die Patenterteilung: **06.03.2013**
(21) Anmeldenummer: 08706824.3
(22) Anmeldetag: 30.01.2008
(51) Int. Cl.: B28B 7/34, B28B 7/06, B29C 33/40, B44C 5/00, B44F 1/06

(54) **VERFAHREN UND VORRICHTUNG ZUR HERSTELLUNG EINES GEBILDES**
METHOD AND DEVICE FOR PRODUCING A STRUCTURE
PROCÉDÉ ET DISPOSITIF POUR PRODUIRE UNE STRUCTURE

(30) Priorität: 02.02.2007 DE 102007006102; 02.04.2007 DE 102007016188
(43) Veröffentlichungstag der Anmeldung: 25.11.2009
(73) Patentinhaber: GAUDOIN, Marcus, 78579 Neuhausen ob Eck (DE)
(72) Erfinder: GAUDOIN, Marcus, 78579 Neuhausen ob Eck (DE)
(74) Vertreter: Otten, Herbert
(86) Internationale Anmeldenummer: PCT/DE2008/000158
(87) Internationale Veröffentlichungsnummer: WO 2008/092433

(56) Entgegenhaltungen:
- DE-A1-102004 046 648
- JP-A- 2000 334 719
- US-A- 5 213 732

## Beschreibung

Die Erfindung betrifft ein Verfahren zur Herstellung eines Gebildes nach Patentanspruch 1 und eine Vorrichtung zur Herstellung eines Gebildes nach Patentanspruch 9.

Aus der DE 10 2004 046 648 B4 ist ein Verfahren zur Herstellung eines Gebildes aus individuellen Bauteilen bekannt, wobei das Gebilde aus wenigstens zwei Körpern bzw. Bauteilen besteht, wobei in Kontakt zueinander stehende Oberflächenbereiche der Körper in ihrer Formgebung aufeinander angepasst sind, wobei jeder Körper in einem elastischen Ballon hergestellt wird und wobei die elastischen Ballone während der Herstellung der Körper in einem Hohlraum einer das Gebilde definierenden Form angeordnet sind.

Aus der DE 39 42 485 A1 ist eine Vorrichtung zum Einbringen von Gegenständen in einen Luftballon bekannt. Diese Vorrichtung zur Herstellung eines Gebildes, umfasst eine Form mit einem Hohlraum und wenigstens einem durch eine Wandung der Form führenden Durchbruch.

Die Druckschrift DE 10 2004 046 648 A1 betrifft ein Verfahren zur Herstellung von individuellen Bauteilen gemäβ dem Oberbegriff des Anspruchs 1, und eine entsprechende Vorrichtung, wobei die Vorrichtung eine Form mit einem Hohlraum und wenigstens einen durch eine Wandung der Form führenden Durchbruch umfasst, wobei in dem Hohlraum mit einem festen, flüssigen oder gasförmigen Material befüllte, elastische Ballone angeordnet sind, die in der Form unter Druckeinwirkung komprimiert werden und von einem flüssigen, aushärtbaren Material über den Durchbruch zur Bildung einer Negativform umspritzt werden. Die elastischen Ballone sind verschlossen.

Aus der Druckschrift JP 2000 334 719 A ist eine Vorrichtung zur Herstellung eines Gebildes, gemäβ dem Oberbegriff des Anspruchs 9 bekannt, in welchem ein elastischer Ballon angeordnet ist, wobei der Ballon mit einem Fluid befüllt ist und der den Ballon umgebende Raum mit einer aushärtbaren Flüssigkeitsmischung. Der elastische Ballon wird nach dem Aushärten der Flüssigkeitsmischung entfernt und der entstehende Hohlraum beispielsweise mit Beton befüllt.

Die Druckschrift US 5 213 732 A betrifft ein Verfahren zur Herstellung von Gips-Artikeln mittels einer Grundform aus einer elastischen, taschenförmigen Haut, wobei ein fließfähiges Gipsmaterial in eine Grundform eingeleitet wird und aushärtet. Optional kann eine relativ feste zweite Form oder eine Kombination aus relativ festen Formen an der Außenseite der Grundform angelegt werden, um die Teile mit einer vorbestimmten Form auszubilden. Die mit dem fließfähigen Gips befüllten Grundformen füllen beim Einlegen in die zweite Form den Raum aus.

Der Erfindung liegt die Aufgabe zugrunde, ein Verfahren und eine Vorrichtung zu entwickeln, welches bzw. welche eine individuellere Einflussnahme auf die einzelnen Körper erlaubt und eine wirtschaftlichere Herstellung von Gebilden aus Körpern begünstigt.

Diese Aufgabe wird bei einem Verfahren zur Herstellung eines Gebildes durch die Merkmale des Anspruchs 1 sowie bei einer Vorrichtung zur Herstellung eines Gebildes durch die Merkmale des Anspruchs 9 gelöst. In den Unteransprüchen sind vorteilhafte und zweckmäßige Weiterbildungen angegeben.

Bei dem erfindungsgemäßen Verfahren zur Herstellung eines Gebildes wird wenigstens ein Teil der Ballone mit ihren Hälsen durch Durchbrüche in einer Wandung der Form aus dem Hohlraum der Form heraus geführt und werden diese Ballone anschließend von außerhalb der Form durch ihre Hälse mit einem aushärtbaren Medium befüllt. Durch diese Abfolge der Verfahrensschritte ist es möglich die einzelnen Ballone individuell zu befüllen und korrigierend in den Vorgang der Formausbildung einzugreifen. Kern der Erfindung ist somit ein Verfahren, welches die Formgebung der in den einzelnen Ballonen entstehenden Körper bzw. Bauteile bzw. Bauklötze nicht ausschließlich dem Zufall überlässt, sondern ein Einwirken auf die einzelnen Körper erlaubt und selbst Korrekturen an dem Volumen und/oder der Form der einzelnen Körper zulässt.

Die Erfindung sieht weiterhin vor, die Hälse bzw. Rüssel der Ballone nach dem Befüllen zu verschließen. Hierdurch kann die Form zum Befüllen weiterer Ballone individuell gedreht werden, ohne dass ein Auslaufen eines der Ballone befürchtet werden muss.

Weiterhin sieht die Erfindung vor, die Ballone nach dem Aushärten der Körper von diesen abzuziehen. Hierdurch entstehen halslose Körper.

Gemäß der Erfindung ist es vorgesehen, die Ballone mit Druck zu befüllen. Hierdurch kann mit einfachen Mitteln ein dynamisches Aufweiten der Ballone erreicht werden, welches von der Füllmenge abhängig ist, aber weitgehend unabhängig von der Lage des Ballons erfolgt.

Die Erfindung sieht für das Befüllen der Ballone einen Überdruck von etwa 0,2 bar bis 0,6 bar vor. Mit einem derartig bemessenen Überdruck ist ein langsames und dennoch ruckfreies Befüllen möglich, das eine optimale Kontrolle über den Befüllvorgang erlaubt.

Alternativ sieht die Erfindung vor, in dem Hohlraum der Form ein Vakuum zu erzeugen. Hierdurch wird ein Entfalten der Ballone vor dem Befüllen bewirkt. Somit ist eine erste Festlegung der Proportionen der einzelnen Körper schon vor dem Füllvorgang möglich, wobei ein weiteres Entfalten bzw. Ausdehnen einzelner Ballone durch ein Verschließen des jeweiligen Halses vorübergehend oder dauerhaft verhindert werden kann.

Die Erfindung sieht für das Entfalten der Ballone vor, in dem Hohlraum der Form ein Vakuum mit einem gegenüber einem Umgebungsdruck auf wenigstens 200 mbar reduzierten Druck zu erzeugen. Hierdurch ist eine optimale Kontrolle des Ausdehnungsvorgangs der Ballone möglich.

Die Erfindung sieht vor, die Form vor dem Befüllen der Ballone zu verschließen. Hierdurch ist einem unkontrollierten Ausdehnen eines Ballons sicher vorgebeugt.

Insbesondere sieht die Erfindung vor, die Ballone vor dem Befüllen durch die Durchbrüche der Form einzuführen. Hierdurch kann einer Verunreinigung des Hohlraums bzw. Innenraums der Form wirksam vorgebeugt werden, da der Hohlraum beim Befestigen der Ballone weitestgehend verschlossen bleibt.

Weiterhin sieht die Erfindung vor, vor dem Befüllen der Körper, wenigstens einen Gegenstand in der Form zu positionieren, wobei der Gegenstand beim Befüllen der Körper abhängig von seiner Position in dem Hohlraum der Form von den Körpern wenigstens teilweise eingebettet wird. Hierdurch ist eine individuelle Verpackung von einem oder mehreren Gegenständen möglich, durch welche Gegenstände praktisch formschlüssig umschlossen werden können. Eine derartige Verpackung aus mehreren Körpern lässt sich von dem oder den eingepackten Gegenständen leicht lösen.

Bei der erfindungsgemäßen Vorrichtung sind in der Wandung der Form wenigstens zwei Durchbrüche zur Durchführung von jeweils einem Hals eines Ballons vorgesehen. Hierdurch ist eine beeinflussbare Herstellung eines aus wenigstens zwei Körpern bestehenden Gebildes möglich, bei welchem sich die Körper während des Herstellungsprozesses in ihrer Form gegenseitig beeinflussen und sich hierbei in ihrer Form aufeinander anpassen. Kern der Erfindung ist somit eine Vorrichtung, die eine größere Kontrolle über einen Herstellungsvorgang erlaubt, bei welchem sich die Körper eines zukünftigen Gebildes in ihrer individuellen Form bzw. ihren individuellen Abmessungen und ihrem individuellen Volumen gegenseitig beeinflussen.

Erfindungsgemäß soll wenigstens eine Innenwand der Form ein Abgleiten einer Außenhaut der Ballone begünstigen. Hierdurch kann ein ruckfreies Entfalten der Ballone erreicht werden, wenn diese durch Druckdifferenzen zwischen dem Innenraum der Form und dem Innenraum der einzelnen Ballone zur Entfaltung gezwungen werden.

Die Erfindung sieht insbesondere vor, die Innenwand der Form mit einem flüssigen oder zähflüssigen Gleitmittel zu beschichten. Ein derartiges Mittel steht beispielsweise mit Seifenlauge kostengünstig und umweltverträglich zur Verfügung.

Zusätzlich oder alternativ ist es erfindungsgemäß vorgesehen, die Innenwand der Form mit einem festen Material zu beschichten, welches gegenüber der Außenhaut von Ballonen einen geringen Reibwert aufweist. Hierdurch können Funktionsstörungen bei fehlendem Gleitmittel wirksam vermieden werden.

Die Erfindung sieht vor, in dem Innenraum der Form ein Vakuum zu erzeugen. Hierdurch kann eine Entfaltung der Ballone bewirkt werden, ohne dass diese bereits befüllt werden müssen.

Weiterhin sieht die Erfindung vor, den Durchbrüchen in der Wandung der Form jeweils ein Ventil zuzuordnen, durch welches der durch den jeweiligen Durchbruch geführte Ballon verschließbar ist. Dies erlaubt eine individuelle Steuerung des Ausdehnungsvorgangs der einzelnen Ballone.

Die Erfindung sieht auch vor, das Ventil durch eine drehbar in der Wandung der Form gelagerte Hülse und den Hals eines in diese eingespannten Ballons zu bilden. Ein derartiges Ventil lässt sich einfach Handhaben, da der einzelne Ballon durch eine gemeinsame Drehung der Hülse mit dem Hals verschlossen und geöffnet werden kann.

Weiterhin sieht die Erfindung vor, die Vorrichtung mit wenigstens einem Haltemitteln auszustatten, durch welches wenigstens ein Gegenstand in dem Hohlraum der Form insbesondere kontaktfrei zu der Wandung der Form fixierbar ist. Hierdurch ist mit den Körpern, welche nach dem Fixieren des Gegenstands befüllbar sind, eine passgenaue Verpackung bzw. Ummantelung für den Gegenstand herstellbar, wobei die Position des Gegenstandes in dem aus dem Körper gebildeten Gebilde vorherbestimmbar ist.

Die Erfindung sieht vor, das Haltemittel durch einen Faden zu bilden, wobei der Faden an der Wandung und an dem Gegenstand befestigt wird. Fäden benötigen wenig Volumen des Hohlraums der Form und beeinträchtigen somit die Ausbildung der Körper beim Befüllen nur minimal.

Schließlich sieht die Erfindung vor, einen bzw. mehrere elastisch dehnbare Fäden zur Befestigung des oder der Gegenstände in der Form zu verwenden. Bei elastischen Fäden ist eine Beeinträchtigung der Körper beim Befüllvorgang besonders gering.

Weitere Einzelheiten der Erfindung werden in der Zeichnung anhand von schematisch dargestellten Ausführungsbeispielen beschrieben.

Hierbei zeigt:
- Figur 1:: eine erfindungsgemäße Vorrichtung in perspektivischer Ansicht;
- Figur 2:: eine perspektivische Ansicht einer zu der in der Figur 1 gezeigten Vorrichtung gehörenden Hülse;
- Figur 3:: ein mit der in der Figur 1 gezeigten Vorrichtung hergestelltes Gebilde;
- Figur 4 - 9:: schematische Schnittdarstellungen der in der Figur 1 gezeigten Vorrichtung zu unterschiedlichen Zeitpunkten des Herstellungsprozesses;
- Figur 10:: die in der Figur 2 gezeigte Hülse mit einem in dieser befestigten Ballon;
- Figur 11:: eine Detailansicht der Figur 10;
- Figur 12:: die in der Figur 10 gezeigte Anordnung bei ausgedehntem Ballon;
- Figur 13:: die in der Figur 12 gezeigte Anordnung bei verschlossenem Ballon;
- Figur 14 - 18:: schematische Darstellung einer zweiten Vorrichtung zu unterschiedlichen Zeitpunkten des Herstellungsprozesses;
- Figur 19:: ein mit der zweiten Vorrichtung hergestelltes Gebilde und
- Figur 20, 21:: eine Vorrichtung, bei welcher in der Form ein Gegenstand aufgehängt ist.

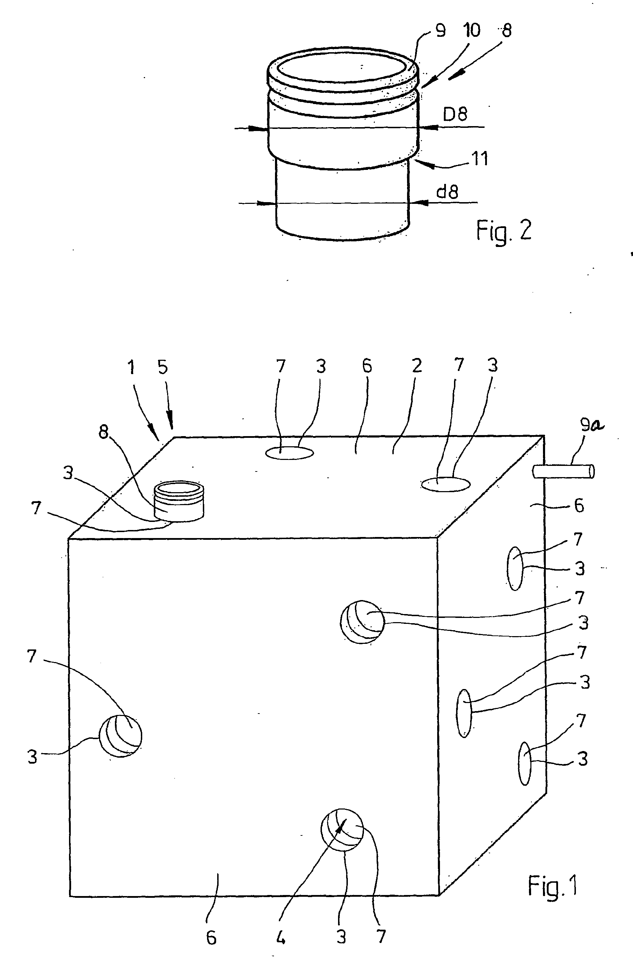

In der Figur 1 ist eine erfindungsgemäße Vorrichtung 1 in perspektivischer Ansicht dargestellt. Die Vorrichtung 1 umfasst im wesentlichen eine Form 2. Die Form 2 weist zahlreiche Durchbrüche 3 auf, die in einen Hohlraum 4 bzw. Innenraum 4 der Form 2 führen. Die Form 2 ist als hohler Würfel 5 ausgeführt, welcher eine Wandung 6 aufweist. Die Durchbrüche 3 sind als Durchgangsbohrungen 7 ausgeführt und dafür vorgesehen, jeweils eine Hülse 8 aufzunehmen. Weiterhin führt ein Saugrohr 9a in den Hohlraum 4 der Form 2.

In der Figur 2 ist die in der Figur 1 gezeigte Hülse 8 vergrößert dargestellt. Die Hülse 8 weist einen Kragen 9 auf, welcher durch eine umlaufende Nut 10 gebildet ist. Weiterhin weist die Hülse 8 einen Absatz 11 auf, an welchem sich die Hülse 8 von einem Außendurchmesser D8 auf einen kleineren Außendurchmesser d8 verjüngt. Durch den Absatz 11 wird verhindert, dass die Hülse 8 durch den Durchbruch 3 in der Wandung 6 der Form 3 in deren Hohlraum 4 hineinrutscht (siehe auch Figur 1).

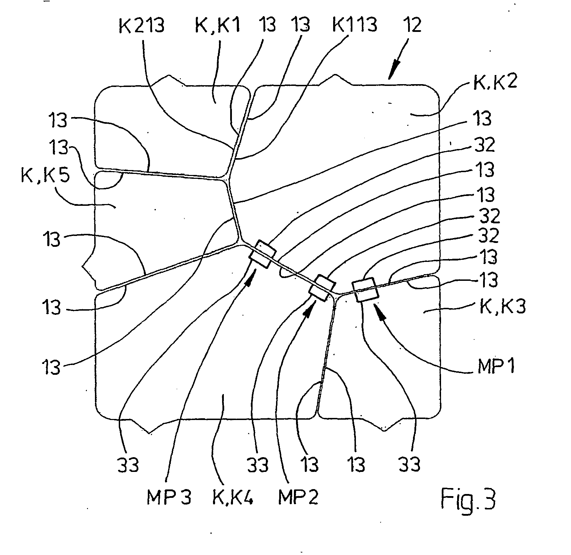

In der Figur 3 ist ein Gebilde 12 dargestellt, welches in der in der Figur 1 gezeigten Form hergestellt wurde. Dass Gebilde 12 besteht aus zahlreichen einzelnen Körpern K, wobei in der Figur 3 fünf Körper K1 bis K5 sichtbar sind. Die einzelnen Körper K bzw. K1 bis K5 sind in Oberflächenbereichen 13 aufeinander angepasst und liegen dort flächig aneinander an. Beispielsweise ist der Körper K2 in seinem Oberflächenbereich K213 auf den Oberflächenbereich K113 des Körpers K1 angepasst. In den Körpern K2, K3 und K4 sind Magnetpaare MP1 bis MP3 angeordnet, welche sich jeweils aus zwei in benachbarten und aneinander anliegenden Körpern K2, K3 bzw. K4 positionierten Magneten 32 und 33 zusammensetzen.

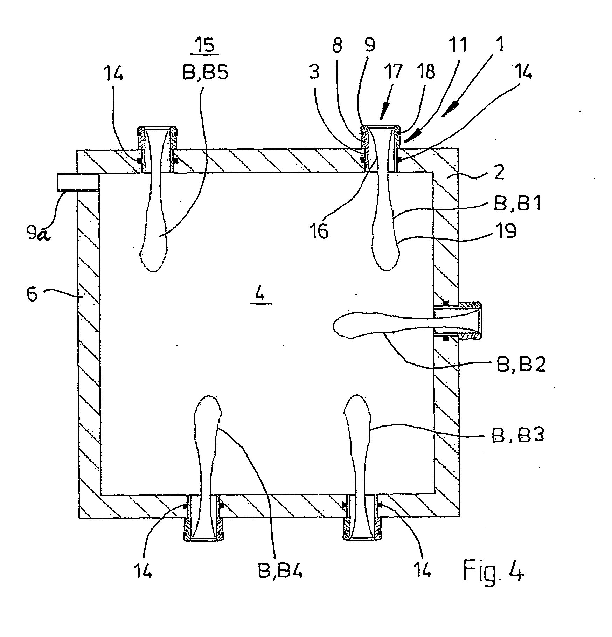

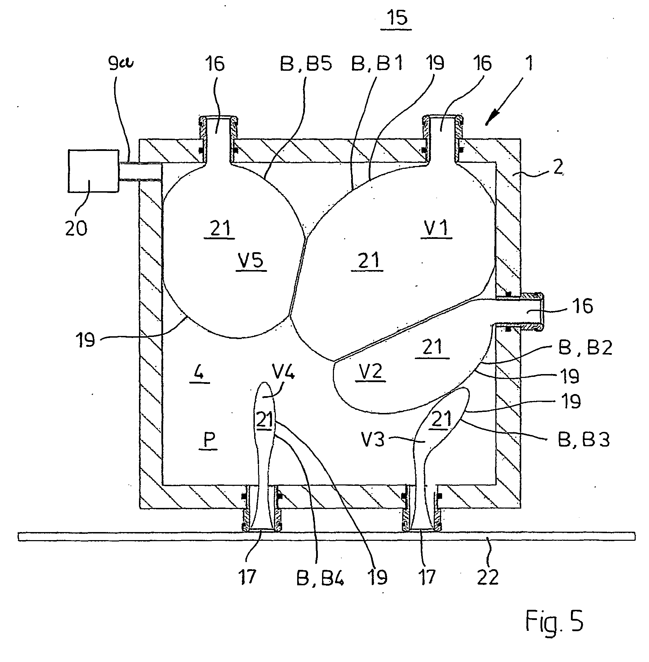

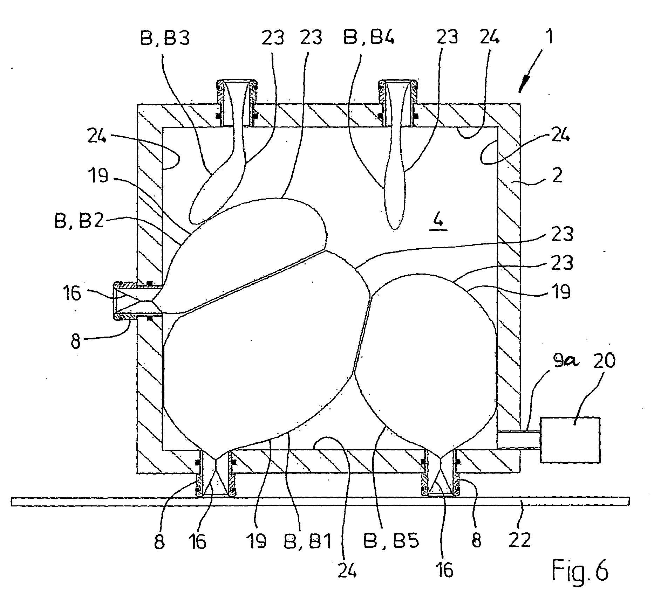

Die Figuren 4 bis 9 zeigen schematische Schnittdarstellungen durch die in der Figur 1 gezeigte Vorrichtung 1 in unterschiedlichen, aufeinanderfolgenden Stadien des Herstellungsprozesses. Im Unterschied zur Figur 1 sind in der Darstellung der Figur 4 alle Durchbrüche 3 der Vorrichtung 1 bzw. der Form 2 mit Hülsen 8 bestückt. In den Schnittdarstellungen der Figuren 4 bis 9 ist in jedem Durchbruch 3 jeweils auch ein elastischer Dichtungsring 14 sichtbar. Durch diese elastischen Dichtungsringe 14 werden die Hülsen 8 klemmend in den Durchbrüchen 3 gehalten. Weiterhin bewirken die elastischen Dichtungsringe 14 eine Abdichtung des Innenraums 4 der Form 2 gegenüber einer Umgebung 15. In der Figur 4 ist auch sichtbar, wie das Saugrohr 9a die Wandung 6 durchdringt und eine Verbindung zwischen dem Innenraum 4 und der Umgebung 15 herstellt. Die Hülsen 8 sind mit Ballonen B bzw. B1 bis B5 bestückt. Die Ballone B sind mit ihren jeweiligen Hälsen 16 durch die Hülsen 8 geführt, wobei ein an einer Öffnung 17 des Ballons B befindlicher Ring 18 jeweils über den Kragen 9 der Hülse 8 gezogen ist und in der Nut 10 der Hülse 8 liegt. Mit Ihren Säcken 19 hängen die Ballone B zu dem in der Figur 4 gezeigtem Zeitpunkt des Herstellungsprozesses noch schlaff in den Innenraum 4 der Form 2. Nach dem Einhängen der Ballone B in die Hülsen 8 und dem Einstecken der mit den Ballonen B bestückten Hülsen 8 in die Durchbrüche 3 der Form 2 wird der Hohlraum 4 der Form 2 durch das Saugrohr 9a evakuiert. Dieser Verfahrensschritt ist in der Figur 5 dargestellt. Zum Absaugen der Luft aus dem Hohlraum 4 wird an das Saugrohr 9a an eine Pumpe 20 angeschlossen. Die Durchbrüche 3 sind durch die Hülsen 8 bzw. die Ballone B gegen ein Nachströmen von Luft aus der Umgebung 15 in den Hohlraum 4 der Form 2 abgedichtet. In Folge eines abnehmenden Drucks p in dem Hohlraum 4 dehnen sich die Säcke 19 der Ballone B1, B2 und B5 aus, wobei durch deren Hälse 16 Luft aus der Umgebung 15 in Innenräume 21 der Ballone B1, B2 und B5 nachströmt und sich die Volumina V1, V2 und V5 der Ballone B1, B2 und B5 vergrößern. Die Volumina V3 und V4 der Innenräume 21 der Ballone B3 und B4 nehmen unter den in der Figur 5 gezeigten Bedingungen nicht zu, da die Öffnungen 17 der Ballone B3 und B4 durch eine Gummiplatte 22 verschlossen sind, auf welcher die Vorrichtung 1 aufliegt. Nachdem sich die Ballone B1, B2 und B3 auf eine gewünschte Größe bzw. die gewünschten Volumina V1, V2 und V5 ausgedehnt haben werden diese verschlossen, um ein Aus- oder Einströmen von Luft in ihre Innenräume 21 zu verhindern. Das Verschließen erfolgt - wie in der Figur 6 gezeigt - durch ein gemeinsames Verdrehen des jeweiligen Halses 16 mit der jeweiligen Hülse 8 gegenüber dem ausgedehnten Sack 19 des Ballons B1 bzw. B2 bzw. B5, welcher sich gegen die Drehbewegung an einer Innenwand 24 der Form 2 abstützt. Nach dem Verschließen der Ballone B1, B2 und B5 wird die Vorrichtung 1 in die in der Figur 6 gezeigte Lage um 180 Grad gedreht. Nunmehr sind die Ballone B3 und B4 nicht mehr durch die Gummiplatte 22 verschlossen und können sich bei zunehmendem Vakuum in den Innenraum 4 der Form 2 wie zuvor die Ballone B1, B2 und B5 ausdehnen. Um ein ruckfreies Ausdehnen der Ballone B zu gewährleisten ist es vorgesehen, Außenhäute 23 der Ballone B und die Innenwand 24 der Form 2 vor Beginn des Evakuierungsvorgangs mit Seifenlauge besprühen.

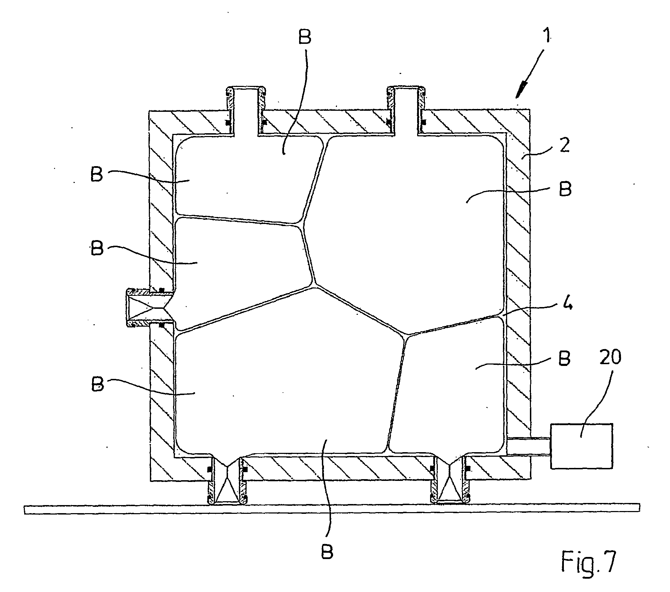

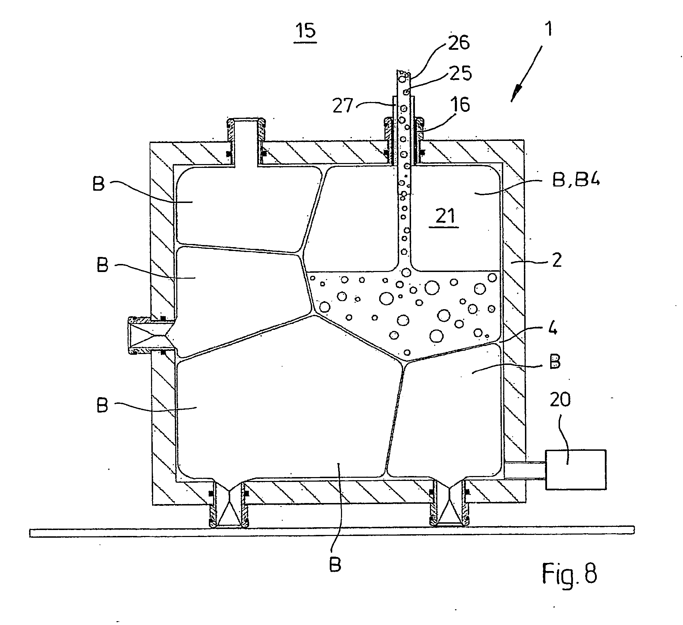

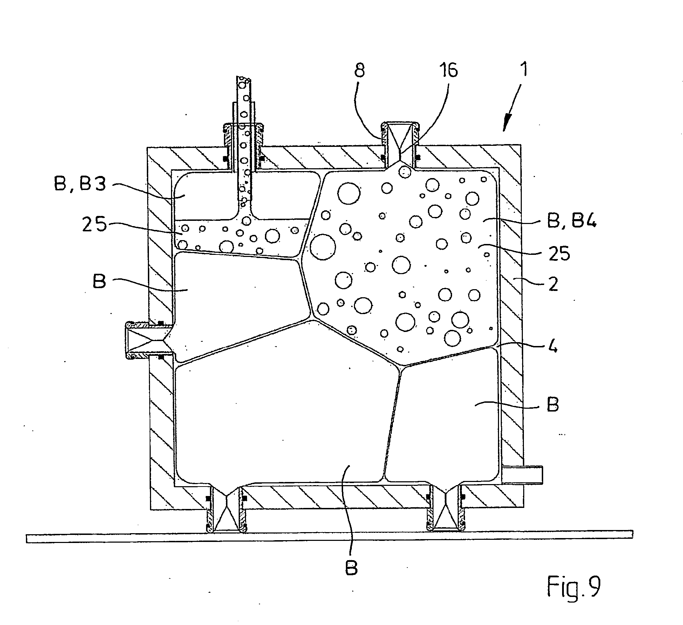

Wenn der Hohlraum 4 nahezu vollständig evakuiert ist, haben sich die Ballone B beispielsweise entsprechend der Darstellung in der Figur 7 ausgedehnt. Das Ausdehnungsverhalten der Ballone B ist von zahlreichen Faktoren abhängig. Ein wichtiger Faktor ist beispielsweise die Wandstärke bzw. das Material der Ballone B. Entscheidend ist selbstverständlich auch der Zeitpunkt, zu welchem der Ballon verschlossen wird bzw. zu welchem der Ballon mit der Expansion beginnen kann. Sobald die Ballone B den Hohlraum 4 der Form 2 ausgefüllt haben - wie dies in der Figur 7 gezeigt ist - kann mit dem Befüllen der Ballone B begonnen werden (siehe Figur 8). Auch während des Befüllvorgangs ist die Pumpe 20 aktiv, um die Ballone B in der gewünschten Form bzw. bei dem gewünschten Volumen zu halten. Das Befüllen der Ballone B mit einem beispielsweise durch Wärmeeinwirkung aushärtbaren Medium 25 erfolgt über ein Rohr 26, welches durch den Hals 16 des Ballons B4 in dessen Innenraum 21 geführt wird. Das Rohr 26 ist so bemessen, dass der Hals 16 des Ballons B4 nicht dicht an dem Rohr 26 anliegt, damit die Luft, welche von dem aushärtbaren Medium 25 verdrängt wird, durch einen zwischen dem Hals 16 und dem Rohr 26 liegenden Spalt 27 in die Umgebung 15 ausströmen kann. Der Befüllvorgang des Ballons B4 ist zu dem in der Figur 9 gezeigten Verfahrenszeitpunkt abgeschlossen. Nach dem vollständigen Befüllen wurde der Ballon B4 in bekannter Weise durch gemeinsames Verdrehen seines Halses 16 mit der Hülse 8 verschlossen. Zu dem in der Figur 9 gezeigten Verfahrenszeitpunkt wird nun der Ballon B3 in vergleichbarer Weise durch das Rohr 26 befüllt. Nachdem alle Ballone B befüllt sind und das aushärtbare Medium 25 in allen Ballonen B ausgehärtet ist, sind in allen Ballonen B die bereits in der Figur 3 gezeigten festen Körper K entstanden. Nach einem Herausnehmen der Ballone B aus der Formund einem Abziehen der Ballone B von den festen Körpern K liegt dann ein Gebilde 12 vor wie es in der Figur 3 gezeigt ist.

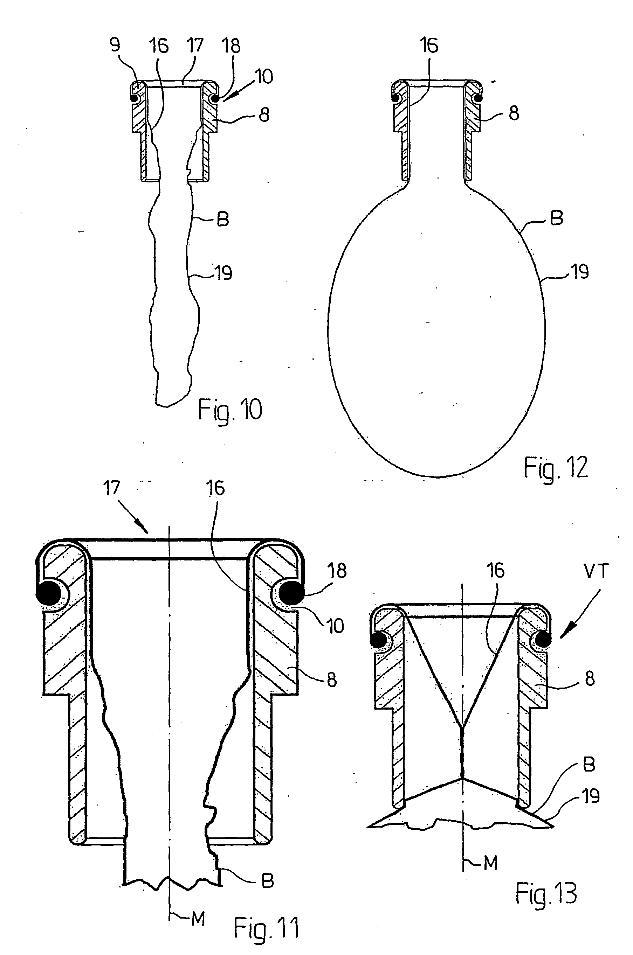

Die Figur 10 zeigt die in der Figur 2 gezeigte Hülse 8 mit einem in die Hülse eingespannten Ballon B. Der Ballon B besteht im wesentlichen aus einem Sack 19, welcher in einen Hals 16 übergeht, wobei der Hals 16 mit einem Ring 18 eine Öffnung 17 bildet. Um den Ballon B an der Hülse 8 zu halten ist dessen Hals 16 über den Kragen 9 der Hülse 8 gezogen, wobei der Ring 18 in die Nut 10 der Hülse 8 schnappt. In der Figur 11 ist ein Ausschnitt der Figur 10 vergrößert dargestellt. In der vergrößerten Darstellung wird deutlich wie der Ballon B mittels seines Rings 18 mit der Hülse 8 verspannt ist. Hierdurch wird verhindert, dass sich der Ballon B und die Hülse 8 um eine Mittelachse M gegeneinander verdrehen. Eine reibschlüssige Verbindung zwischen dem Ballon B und der Hülse 8 ist wichtig, um den expandierten Ballon B, den die Figur 12 zeigt, entsprechend der Darstellung der Figur 13 durch ein gemeinsames Verdrehen der Hülse 8 und des Halses 16 um die Mittelachse M gegenüber dem expandierten Sack 19 verdrehen und damit verschließen zu können. Die Hülse 8 und der Hals 16 bilden zusammen ein einfaches Ventil VT, welches wiederholt geschlossen und geöffnet werden kann.

Ein Verfahren zur Herstellung eines erfindungsgemäßen Gebildes, bei welchem ein Innenraum einer Form evakuiert wird, um ein Entfalten von Ballonen zu bewirken, umfasst beispielsweise die folgenden Vorbereitungen und Schritte:
- Herstellung einer luftdichten, demontierbaren Form bzw. Negativform mit Durchbrüchen bzw. Bohrungen zum Einführen von Hülsen bzw. Drehstutzen und eines Saugrohres.
- Vorbereiten der Form durch Besprühen der Innenwand der Form mit einem Gleitmittel, welches beispielsweise aus einer Mischung aus Wasser und Spülmittel besteht. Hierdurch können die Ballone beim Expandieren ruckfrei aneinander und an der Negativform entlang gleiten.
- Einführen der Ballone durch die Drehstutzen in die Negativform und insbesondere anschließendes Umstülpen der Ballonlippen bzw. Hälse der Ballone nach außen über den Drehstutzen. Um das Gleiten der Ballone weiter zu verbessern, ist es vorgesehen diese bereits vor dem Einführen mit dem Gleitmittel zu besprühen.
- Die mit Drehstutzen und Ballonen bestückte Negativform wird nun auf eine Gummimatte gestellt. Die Ballone, welche an den auf der Gummimatte aufliegenden Drehstutzen befestigt sind, werden durch die Gummimatte abgedichtet und können nicht expandieren. Alternativ kann auch ein Teil der noch nicht expandierten Ballone auch durch Stopfen verschlossen werden, welche in die Hülsen eingedrückt werden.
- Eine Pumpe bzw. Vakuumpumpe saugt die Luft durch das Saugrohr aus dem Innenraum der Negativform.
- Die Ballone, die zur Umgebung offen sind, expandieren unter Einwirkung des gegenüber einem Umgebungsdruck zunehmenden Unterdrucks.
- Die expandierten Ballone werden durch ein Verdrehen der Drehstutzen verschlossen.
- Die Negativform wird gewendet bzw. die Stopfen werden aus den Hülsen entfernt und der Vorgang wird wiederholt, bis alle Ballone aneinander und an der Negativform anliegen bzw. bis die Ballone die Negativform ausfüllen.
- Durch Abschalten des Vakuums und/oder kurzzeitiges Öffnen der Ballone durch ein Zurückdrehen der Drehstutzen kann jeder Ballon nach Belieben entlüftet werden. Andere Ballone können nun durch das erneute Einschalten der Vakuumpumpe und das Öffnen der Ballone durch ein Zurückdrehen der Drehstutzen expandieren. Dieser Vorgang wird solange wiederholt, bis die gewünschte Verteilung des Gesamtvolumens des Innenraums der Form auf die einzelnen Ballone erfolgt ist.
- Anschließend werden die nach oben zeigenden Drehstutzen geöffnet, währen die Pumpe weiter arbeitet. Die einzelnen Ballone werden durch ihre Ballonhälse mit dem gewünschten Material gefüllt und nach dem Füllen durch ein erneutes Verdrehen des Drehstutzens verschlossen. Dieser Vorgang wird bei allen Ballonen durchgeführt.
- Nachdem alle Ballone gefüllt sind, wird die Vakuumpumpe abgeschaltet. Nun kann das Material in den Ballonen aushärten.
- Nach dem Aushärten des Füllmaterials werden die Drehstutzen aus den Bohrungen der Form herausgezogen. Hierbei wird jeweils der Ballonhals samt dem Drehstutzen vom Ballon getrennt. Die Negativform wird geöffnet und die Ballone werden mit den in diesen erhärteten Körpern entnommen. Die Ballone werden dann von den einzelnen Körpern abgestreift.

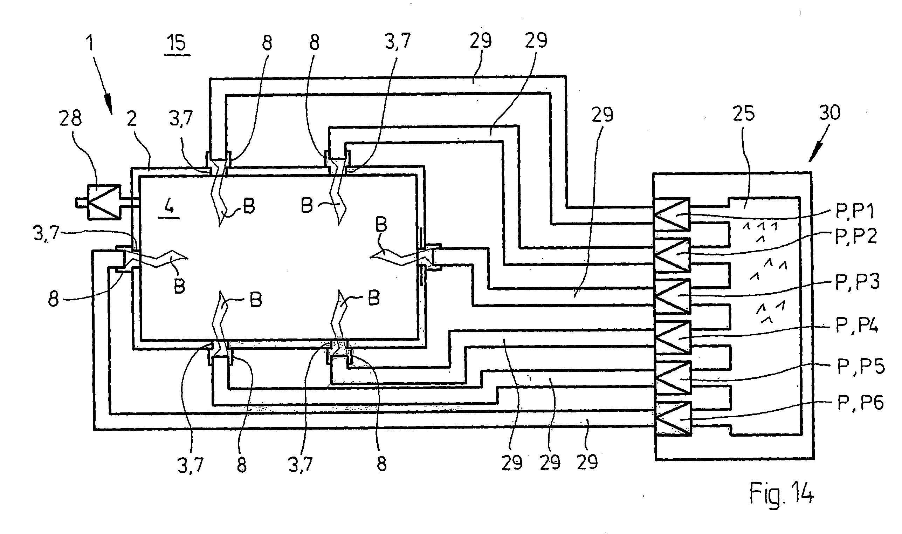

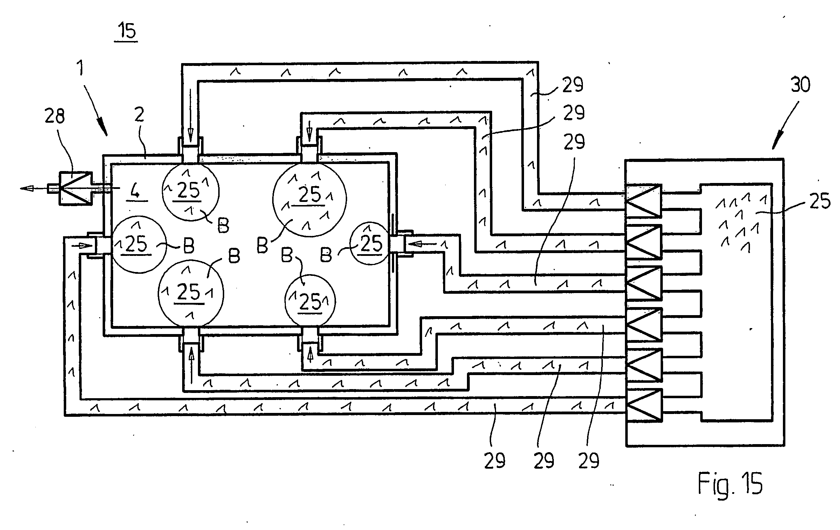

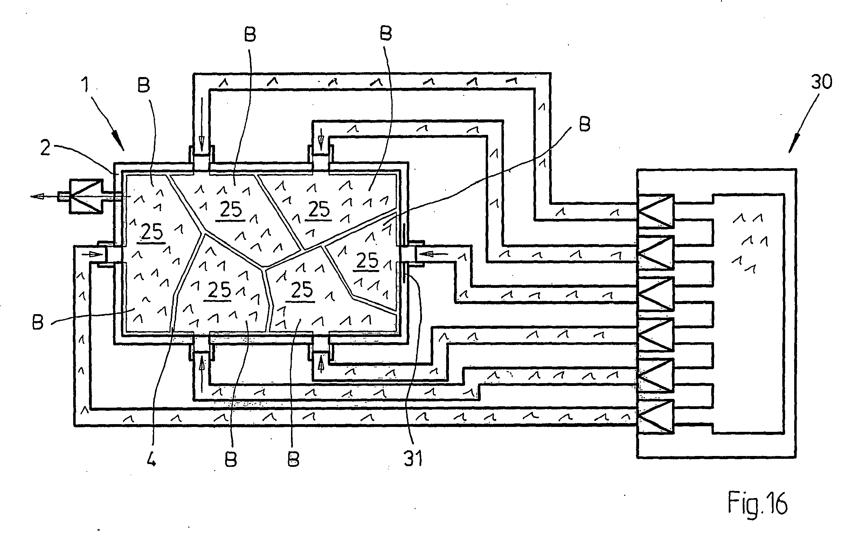

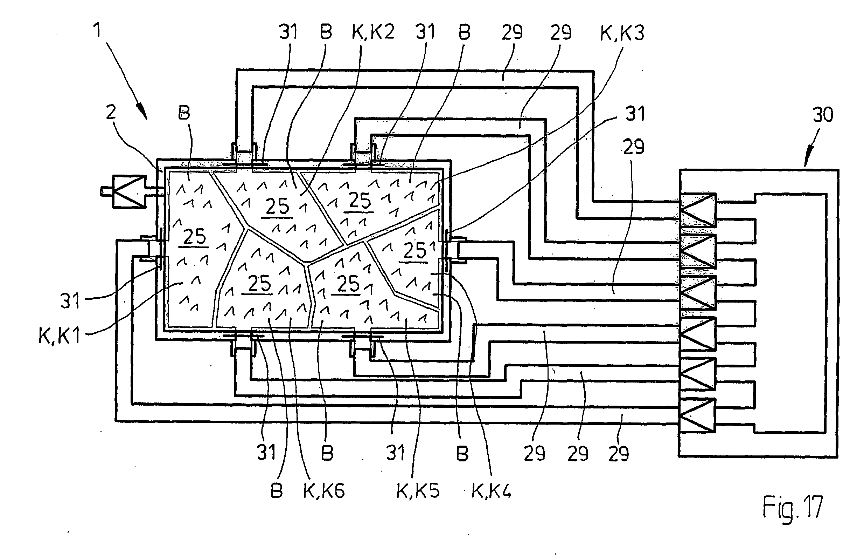

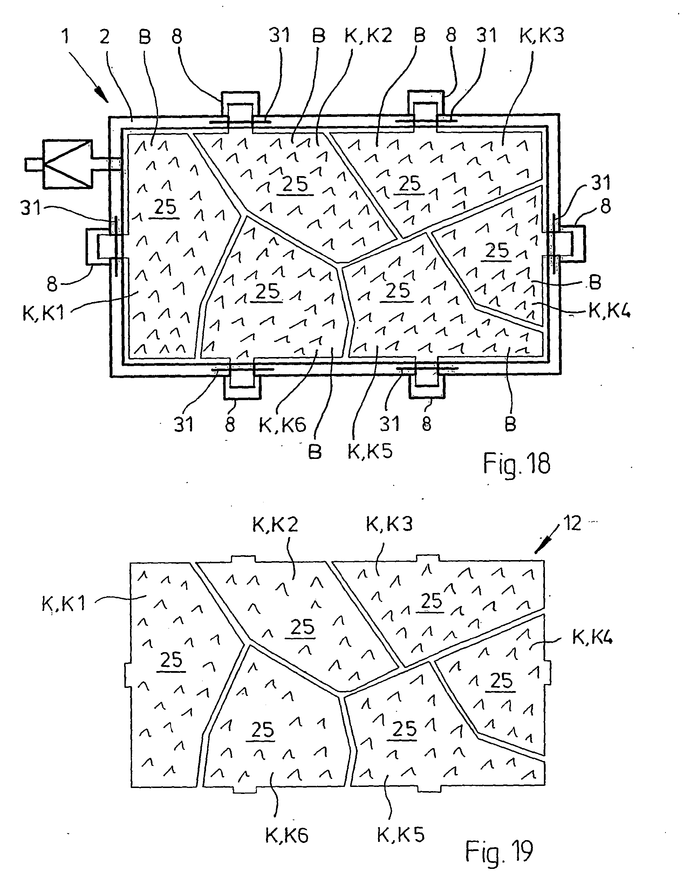

Die Figuren 14 bis 18 zeigen schematische Darstellung einer zweiten Vorrichtung 1 zu unterschiedlichen Zeitpunkten des Herstellungsprozesses. Die Vorrichtung 1 umfasst im wesentlichen einen Form 2, welche einen Hohlraum 4 allseitig umschließt. Der Hohlraum 4 ist über Durchbrüche 3 zugänglich. Diese sind als Durchgangsbohrungen 7 ausgeführt. In die Durchbrüche 3 sind Hülsen 8 einsteckbare, in welche Ballone B einspannbar sind. Bezüglich der Befestigung der Ballone B an den Hülsen 8 wird insbesondere auf die Figuren 10 und 11 und die zugehörige Beschreibung verwiesen. Weiterhin umfasst die Vorrichtung ein Ventil 28, über welches Luft aus dem Hohlraum 4 in eine Umgebung 15 entweichen kann. Die Vorrichtung 1 ist mit ihren Hülsen 8 bzw. ihren Ballonen B mittels Schläuchen 29 an eine Pumpvorrichtung 30 angeschlossen, wobei jedem Schlauch 29 eine Pumpe P bzw. P1 bis P6 zugeordnet ist, um ein aushärtbares Medium 25 zu vorbestimmbaren Zeitpunkten bzw. für vorbestimmbare Zeitdauern mit individuell regelbarem Druck bzw. individuell regelbarem Volumenstrom in die Ballone B zu pumpen. Die Figur 14 zeigt die vollständig vorbereitete Vorrichtung 1, bei welcher alle Durchbrüche 3 mit Hülsen 8 und Ballonen B bestückt sind und die bereits an die Pumpvorrichtung 30 angeschlossen ist. Die Figur 15 zeigt die Vorrichtung 1 bei arbeitender Pumpvorrichtung 30. Über die Schläuche 29 wird das aushärtbare Medium 25 z.B. flüssiges Parafin, welches beim Erkalten aushärtet, in die Ballone B gepumpt. Hierbei dehnen sich die Ballone B aus und verdrängen durch das Ventil 28 Luft aus dem Innenraum 4 der Form 2. Die Figur 16 zeigt die Vorrichtung 1 bei weiter fortgeschrittenem Herstellungsprozess die Ballone B sind nun soweit gefüllt, dass der Innenraum 4 der Form praktisch vollständig von den Ballonen B bzw. dem in die Ballone B geförderten aushärtbaren Medium 25 ausgefüllt ist. In der Figur 17 ist entsprechend dem weiteren Fortgang des Herstellungsprozesses dann dargestellt wie die vollständig gefüllten Ballone B im Bereich ihrer Hälse 19 durch automatisch betätigbare Sperrschieber 31 verschlossen werden. Anschließend kann die Pumpvorrichtung 30 mit ihren Schläuchen 29 von der Vorrichtung 1 getrennt werden, da ein Auslaufen der Ballone B durch die Sperrschieber 31 wirksam verhindert ist (siehe Figur 18). Die Ballone B bzw. in den Ballonen B aus dem Medium 25 entstehende Körper K bzw. K1 bis K6 verbleiben in der Form 2 bis das Medium 25 vollständig ausgehärtet ist.

Die Figur 19 zeigt ein mit der zweiten Vorrichtung 1 hergestelltes Gebilde 12, welches nach dem Aushärten des Mediums 25, dem anschließenden Entnehmen aus der Form und dem Abziehen der Ballone vorliegt. Das Gebilde 12 kann nun in die einzelnen festen Körper K bzw. K1 bis K6 zerlegt werden und aus diesen wieder zusammengebaut werden. Abhängig von den beim Befüllen der Ballone vorherrschenden Parametern lassen sich so mit der selben Vorrichtung unterschiedlichste Gebilde 12 herstellen.

Ein Verfahren zur Herstellung eines erfindungsgemäßen Gebildes, bei welchem ein aushärtbares Medium in die Ballone gedrückt wird, um ein Entfalten von Ballonen zu bewirken, umfasst beispielsweise die folgenden Vorbereitungen und Schritte:
- Herstellung einer dichten Form bzw. Negativform mit Hülsen bzw. Drehstutzen zum Einlegen und Verschließen von Ballonen.
- Einführen der Ballone in den Innenraum der Form von außen durch die Drehstutzen.
- Befestigung der Ballone an den Drehstutzen, insbesondere durch Überstülpen des jeweiligen Ballonhalses über den Drehstutzen.
- Einpressen des gewünschte, aushärtbaren Materials in die Ballone, bis die Ballone den Innenraum ausfüllen und an den Innenwänden der Negativform anliegen.
- Verschließen der gefüllten Ballone durch Verdrehen des jeweiligen Drehstutzens mit dem Ballonhals.
- Nach dem Aushärten des Füllmaterials zu festen Körpern werden die Drehstutzen aus den Bohrungen der Negativform gezogen und hierbei wird der Ballonhals samt dem Drehstutzen vom jeweiligen Ballon getrennt. Die Negativform wird geöffnet und die Ballone mit den in diesen enthaltenen Körpern werden der Form entnommen. Die Ballone werden von den einzelnen Körpern abgestreift.

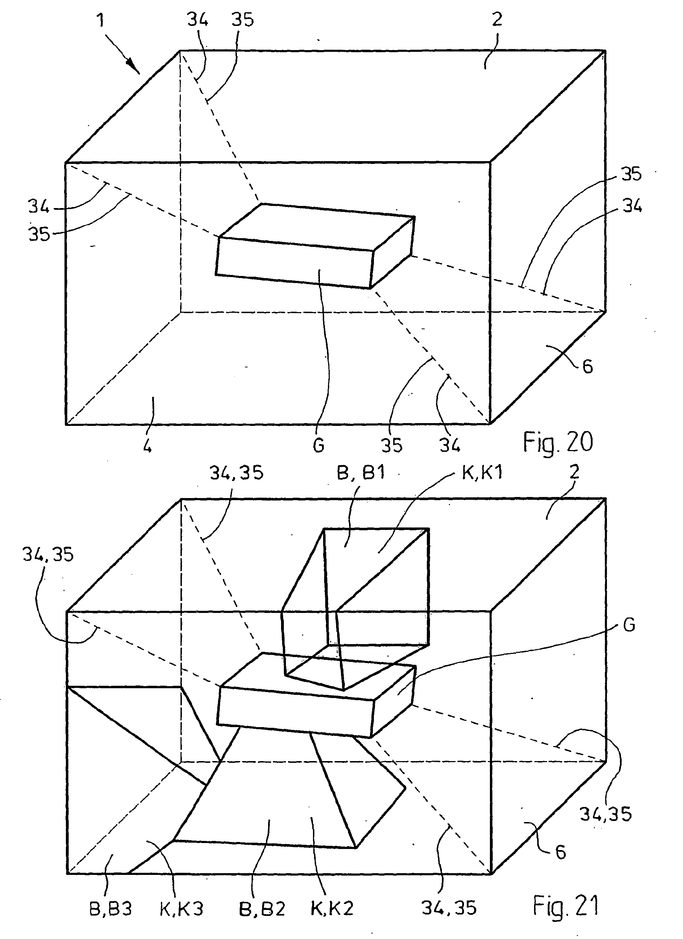

Die Figur 20 zeigt eine perspektivische Ansicht einer Vorrichtung 1. Die Vorrichtung 1 umfasst eine Form 2 mit einem Hohlraum 4. Zur Vereinfachung der Darstellung ist die Wandung 6 der Form 2 durchsichtig dargestellt. Weiterhin wurde zur Vereinfachung der Darstellung darauf verzichtet, Durchgangsbohrungen zu zeigen, durch welche die Hälse von Ballonen geführt werden. In dem Hohlraum 4 ist über Befestigungsmittel 34 ein Gegenstand G aufgehängt, wobei der Gegenstand G die Wandung 6 der Form 2 nicht berührt. Der Gegenstand G wird also durch die Befestigungsmittel 34, die als Fäden 35 ausgebildet sind, frei schwebend in dem Hohlraum 4 gehalten. Nachdem der Gegenstand G in dem Hohlraum 4 aufgehängt ist, werden nicht dargestellte Ballone durch die nicht dargestellten Durchgangsbohrungen in der Wandung 6 eingeführt und befüllt. Die sich befüllenden Ballone legen sich dann zwischen die Wandung 6 der Form 2 und den Gegenstand G und betten diesen ein. In der Figur 21 ist in schematischer Darstellung gezeigt wie der Gegenstand G von drei exemplarisch dargestellten Körpern K bzw. K1 bis K3 eingebettet ist, wobei sich die Körper K bzw. K1 bis K3 noch in ihren Ballonen B, B1 bis B3 befinden. Der Gegenstand G kann zum Beispiel als Seife oder als empfindliches optisches Bauteil oder als Flüssigkeitsbehälter oder als Nahrungsmittel ausgebildet sein. Weiterhin ist es vorgesehen, einen metallischen Gegenstand einzubetten und die Körper beim Herstellungsvorgang oder nach dem Herstellungsvorgang an ihren Kontaktflächen zu dem Gegenstand mit Magneten zu bestücken. Hierdurch kann ein Zusammenhalt zischen dem Gegenstand und den diesen umgebenden Körpern erreicht werden. Gemäß einer Ausführungsvariante ist es auch vorgesehen, den Gegenstand magnetische auszubilden und die Körper an ihren Kontaktflächen magnetisch und/oder metallisch auszubilden.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, dass die Wandung der Form mit Fenstern oder aus einem durchsichtigen Werkstoff wie beispielsweise Acrylglas ausgebildet sind. Hierdurch kann der Ausdehnungsprozess der Ballone beobachtet werden, so dass bei ungewünschtem Ausdehnungsverhalten eines oder mehrerer Ballone regulierend eingegriffen werden kann. Weiterhin ist es vorgesehen, in die Ballone Bauteile, wie zum Beispiel Magnete einzubetten. Hierdurch kann ein Zusammenhalt eines Gebildes in unterschiedlichen Lagen sicher gewährleistet werden. Weiterhin können Magnetpaare, welche auf zwei benachbarte Körper verteilt sind, den Zusammenbau des Gebildes erleichtern, wenn sich die Magnet des Magnetpaars bei der richtigen Positionierung der Körper anziehen.

Die Ballone werden vorzugsweise mit Druck befüllt.

Die Ballone werden vorzugsweise mit einem Überdruck von etwa 0,2 bar bis 0,6 bar befüllt.

In dem Hohlraum der Form wird vorzugsweise ein Vakuum erzeugt.

Der Hohlraum der Form wird vorzugsweise auf einen unter einem Umgebungsdruck liegenden Druck von wenigstens 200 mbar evakuiert.

Das Ventil ist vorzugsweise durch eine drehbar in der Wandung der Form gelagerte Hülse und den Hals des Ballons gebildet.

Die Vorrichtung weist vorzugsweise wenigstens ein Haltemittel auf, durch welches wenigstens ein Gegenstand in dem Hohlraum der Form befestigbar ist.

Der Gegenstand ist vorzugsweise kontaktfrei zu der Wandung der Form in dem Hohlraum befestigbar.

Das Haltemittel ist vorzugsweise durch einen Faden gebildet, wobei der Faden an der Wandung und an dem Gegenstand befestigt ist.

Der Faden ist vorzugsweise elastisch dehnbar.

### Bezugszeichenliste:

- 1: Vorrichtung
- 2: Form
- 3: Durchbruch
- 4: Hohlraum, Innenraum
- 5: Würfel
- 6: Wandung
- 7: Durchgangsbohrung
- 8: Hülse
- 9: Kragen von 8
- 9a: Saugrohr
- 10: Nut an 8
- 11: Absatz an 8
- 12: Gebilde
- 13: Oberflächebereich von K bzw. K1 bis K5
- 14: elastischer Dichtungsring an 2
- 15: Umgebung
- 16: Hals von B bzw. B1 bis B5
- 17: Öffnung von B
- 18: Ring von B
- 19: Sack von B
- 20: Pumpe
- 21: Innenraum von B
- 22: Gummiplatte
- 23: Außenhaut von B
- 24: Innenwand von 2
- 25: aushärtbares Medium
- 26: Rohr
- 27: Spalt zwischen 16 und 26
- 28: Ventil an 2
- 29: Schlauch von 8 zu 30
- 30: Pumpvorrichtung
- 31: Sperrschieber in 2
- 32: Magnet
- 33: Magnet
- 34: Befestigungsmittel
- 35: Faden

- B, B1-B6: Ballon
- d8, D8: Durchmesser von 8
- G: Gegenstand
- K, K1-K6: Körper
- K113: Oberflächenbereich von K3
- K213: Oberflächenbereich von K2
- M: Mittelachse von 8 bzw. 16
- MP1 - MP3: Magnetpaar
- p: Druck in 4
- P: Pumpe
- P1 - P6: Pumpe
- V1 - V5: Volumen von B
- VT: Ventil aus 8 und 16

## Patentansprüche

1. Verfahren zur Herstellung eines Gebildes (12), wobei das Gebilde (12) aus wenigstens zwei Körpern (K, K1 - K6) besteht,
wobei in Kontakt zueinander stehende Oberflächenbereiche (13, K113, K213) der Körper (K; K1 - K6) in ihrer Formgebung aufeinander angepasst sind, wobei jeder Körper (K; K1 - K6) in einem elastischen Ballon (B; B1 - B6) hergestellt wird und wobei die elastischen Ballone (B; B1 - B6) während der Herstellung der Körper (K; K1 - K6) in einem Hohlraum (4) einer das Gebilde (12) definierenden Form (2) angeordnet sind, **dadurch gekennzeichnet, dass** wenigstens ein Teil der Ballone (B; B1 - B6) mit ihren Halsen (16) durch Durchbrüche (3) in einer Wandung (6) der Form (2) aus dem Hohlraum (4) der Form (2) heraus geführt werden und
wobei diese Ballone (B; B1 - B6) von außerhalb der Form (2) durch ihre Hälse (16) mit einem aushärtbaren Medium (25) befüllt werden.

2. Verfahren nach Anspruch 1, **dadurch gekennzeichnet, dass** die Hälse (16) der Ballone (B; B1 - B6) nach dem Befüllen verschlossen werden.

3. Verfahren nach einem der vorhergehenden Ansprüche, **dadurch gekennzeichnet, dass** die Ballone (B; B1 - B6) nach dem Aushärten der Körper (K; K1 - K6) von diesen abgezogen werden.

4. Verfahren nach einem der vorhergehenden Ansprüche, **dadurch gekennzeichnet, dass** die Ballone (B; B1 - B6) mit Druck befüllt werden, wobei die Ballone (B; B1 - B6) insbesondere mit einem Überdruck von etwa 0,2 bar bis 0,6 bar befüllt werden.

5. Verfahren nach einem der Ansprüche 1 bis 3, **dadurch gekennzeichnet, dass** in dem Hohlraum (4) der Form (2) ein Vakuum erzeugt wird, wobei der Hohlraum (4) der Form (2) insbesondere auf einen unter einem Umgebungsdruck liegenden Druck von wenigstens 200 mbar evakuiert wird.

6. Verfahren nach einem der vorhergehenden Ansprüche 1 bis 4, **dadurch gekennzeichnet, dass** die Form (2) vor dem Befüllen der Ballone (B; B1 - B6) verschlossen wird.

7. Verfahren nach einem der vorhergehenden Ansprüche, **dadurch gekennzeichnet, dass** die Ballone (B; B1 - B6) vor dem Befüllen durch die Durchbrüche (3) der Form (2) eingeführt werden.

8. Verfahren nach einem der vorhergehenden Ansprüche, **dadurch gekennzeichnet, dass** in der Form (2) wenigstens ein Gegenstand (G) positioniert wird, welcher beim Befüllen der Körper (K; K1 - K6) von diesen wenigstens teilweise umschlossen wird.

9. Vorrichtung (1) zur Herstellung eines Gebildes (12), umfassend eine Form (2) mit einem Hohlraum (4) und durch eine Wandung (6) der Form führende Durchbrüche (3), wobei elastische Ballone (B; B1 - B6) in dem Hohlraum (4) der das Gebilde definierenden Form (2) angeordnet sind, insbesondere zur Durchführung des Verfahrens nach einem oder mehreren der vorhergehenden Ansprüche 1 bis 8, wobei die Wandung (6) der Form (2) wenigstens zwei Durchbrüche (3) aufweist, wodurch jeweils ein Hals (16) eines Ballons (B; B1 - B6) hindurchgeführt ist, **dadurch gekennzeichnet, dass** in den Innenraum (4) der Form (2) ein Saugrohr (9a) führt, woran eine Pumpe (20) angeschlossen ist, über welches ein Vakuum erzeugt wird.

10. Vorrichtung nach Anspruch 9, **dadurch gekennzeichnet, dass** an wenigstens einer Innenwand (24) der Form (2) eine Außenhaut (23) der Ballone (B; B1 - B6) abgleitet.

11. Vorrichtung nach einem der Ansprüche 9 bzw. 10, **dadurch gekennzeichnet, dass** die Innenwand (24) der Form (2) eine Beschichtung mit einem flüssigen oder zähflüssigen Gleitmittel aufweist.

12. Vorrichtung nach einem der Ansprüche 9 bis 11, **dadurch gekennzeichnet, dass** die Innenwand (24) der Form (2) eine Beschichtung mit einem festen Material umfasst, welches gegenüber der Außenhaut (23) von Ballonen (B; B1 - B6) einen geringen Reibwert aufweist.

13. Vorrichtung nach einem der vorhergehenden Ansprüche 9 bis 12, **dadurch gekennzeichnet, dass** den Durchbrüchen (3) in der Wandung (6) der Form (2) jeweils ein Ventil (VT) zugeordnet ist, durch welches der durch den jeweiligen Durchbruch (3) geführte Ballon (B; B1 - B6) verschließbar ist, wobei das Ventil (VT) insbesondere durch eine drehbar in der Wandung (6) der Form (2) gelagerte Hülse (8) und den Hals (16) des Ballons (B; B1 - B6) gebildet ist.

14. Vorrichtung nach einem der vorhergehenden Ansprüche 9 bis 13, **dadurch gekennzeichnet, dass** die Vorrichtung (1) wenigstens ein Haltemittel (34) aufweist, durch welches wenigstens ein Gegenstand (G) in dem Hohlraum (4) der Form (2) befestigbar ist, wobei der Gegenstand (G) insbesondere kontaktfrei zu der Wandung (6) der Form (2) in dem Hohlraum (4) befestigbar ist, wobei das Haltemittel (34) insbesondere durch einen Faden (35) gebildet ist, wobei der Faden(35) an der Wandung (6) und an dem Gegenstand (G) befestigt ist und wobei der Faden (35) insbesondere elastisch dehnbar ist.

## Claims

1. A method for the production of a structure (12), wherein the structure (12) consists of at least two bodies (K; K1-K6), wherein surface areas (13, K113, K213) of the bodies (K; K1-K6) being in contact with each other are adjusted to each other in terms of their forms, wherein each body (K; K1-K6) is produced in an elastic balloon (B; B1-B6), and wherein the elastic balloons (B; B1-B6) are disposed in a hollow space (4) of a form (2) defining the structure (12) during the production of the bodies (K; K1-K6), **characterized in that** at least part of the balloons (B; b1-B6) are guided out through cutouts (3) in a wall (6) of the form (2) from the hollow space (4) of the form (2) by their necks (16), and wherein these balloons (B; B1-B6) are filled with a curable medium (25) outside of the form (2) via their necks (16).

2. The method according to claim 1, **characterized in that** the necks (16) of the balloons (B; B1-B6) are closed after filling.

3. The method according to one of the previous claims, **characterized in that** after the curing of the bodies (K; K1-K6) the balloons (B; B1-B6) are peeled off the same.

4. The method according to one of the previous claims, **characterized in that** the balloons (B; B1-B6) are filled with pressure, wherein the balloons (B; B1-B6) are in particular filled with an excess pressure of approximately 0.2 Bars to 0.6 Bars.

5. The method according to one of the claims 1 to 3, **characterized in that** a vacuum is created in the hollow space (4) of the form (2), wherein the hollow space (4) of the form (2) is evacuated to a pressure, particularly being below an ambient pressure, of at least 200 mBars.

6. The method according to one of the previous claims 1 to 4, **characterized in that** the form (2) is closed before the filling of the balloons (B; B1-B6).

7. The method according to one of the previous claims, **characterized in that** the balloons (B; B1-B6) are inserted through the cutouts (3) of the form (2) before filling.

8. The method according to one of the previous claims, **characterized in that** at least one object (G) is positioned in the form (2), which during the filling of the body (K; K1-K6) is at least partially surrounded by the same.

9. A device (1) for the production of a structure (12), comprising a form (2) with a hollow space (4), and cutouts (3) leading through a wall (6) of the form, wherein elastic balloons (B; B1-B6) are disposed in the hollow space (4) of the form (2) defining the structure, in particular for carrying out the method according to one or more of the previous claims 1 to 8, wherein the wall (6) of the form (2) has at least two cutouts (3), through which a neck (16) of a balloon (B; B1-B6) is guided, **characterized in that** an intake tube (9a) leads into the interior (4) of the form (2), to which a pump (20) is connected, via which a vacuum is generated.

10. The device according to claim 9, **characterized in that** an exterior skin (23) of the balloons (B; B1-B6) glides off of at least one interior wall (24) of the form (2).

11. The device according to one of the claims 9 or 10, **characterized in that** the interior wall (24) of the form (2) has a coating with a liquid or viscous lubricant.

12. The device according to one of the claims 9 to 11, **characterized in that** the interior wall (24) of the form (2) comprises a coating with a firm material, which has a lower friction coefficient as opposed to the exterior skin (23) of the balloons (B; B1-B6).

13. The device according to one of the previous claims 9 to 12, **characterized in that** one valve (VT) is assigned to each of the cutouts (3) in the wall (6) of the form (2), through which the balloon (B; B1-B6) guided through the respective cutout (3) may be closed, wherein the valve (VT) is formed, particularly by means of a sleeve (8) that is pivot-mounted in the wall (6) of the form (2), and by means of the neck (16) of the balloon (B; B1-B6).

14. The device according to one of the previous claims 9 to 13, **characterized in that** the device (1) has at least one retaining means (34), by means of which at least one object (G) may be attached in the hollow space (4) of the form (2), wherein the object (G) may be attached to the wall (6) of the form (2) in the hollow space (4) in a particularly contact-free manner, wherein the retaining means (34) is particularly formed by means of the thread (35), wherein the thread (35) is attached at the wall (6) and at the object (G), and wherein the thread (35) may be stretched, particularly in an elastic manner.

## Revendications

1. Procédé de fabrication d'une structure (12), la structure (12) se composant d'au moins deux corps (K ; K1 - K6), des secteurs superficiels (13, K113, K213) des corps en contact entre eux étant adaptées les uns aux autres quant à leur façonnage, chaque corps (K ; K1 - K6) étant réalisé dans un ballon (B ; B1-B6) élastique et les ballons (B ; B1-B6) élastiques étant, pendant la fabrication des corps (K ; K1 - K6), disposés dans une cavité (4) d'un moule (2) définissant la structure (12), **caractérisé en ce qu'**au moins une partie des ballons (B ; B1-B6) élastiques sont, avec leurs cols (16), extraits de la cavité (4) du moule (2) à travers des traversées (3) dans une paroi (6) du moule (2), et ces ballons (B ; B1-B6) élastiques étant, depuis l'extérieur du moule (2), remplis, à travers leurs cols (16), d'un fluide (25) durcissable.

2. Procédé selon la revendication 1, **caractérisé en ce que** les cols (16) des ballons (B ; B1-B6) sont fermés après le remplissage.

3. Procédé selon une des revendications précédentes, **caractérisé en ce que** les ballons (B ; B1-B6), après le durcissement des corps (K ; K1 - K6), sont extraits de ces derniers.

4. Procédé selon une des revendications précédentes, **caractérisé en ce que** les ballons (B ; B1-B6) sont remplis sous pression, les ballons (B ; B1-B6) élastiques étant remplis en particulier avec une surpression d'environ 0,2 bar à 0,6 bar.

5. Procédé selon une des revendications 1 à 3, **caractérisé en ce qu'**un vide est produit dans la cavité (4) du moule (2), la cavité (4) du moule (2) étant vidée de son air, en particulier à une pression d'au moins 200 mbar au-dessous d'une pression ambiante.

6. Procédé selon une des revendications précédentes 1 à 4, **caractérisé en ce que** le moule (2) est fermé avant le remplissage des ballons (B ; B1-B6).

7. Procédé selon une des revendications précédentes, **caractérisé en ce que** les ballons (B ; B1-B6) sont, avant le remplissage, introduits à travers les traversées (3) du moule (2).

8. Procédé selon une des revendications précédentes, **caractérisé en ce que**, dans le moule (2), il est positionné au moins un objet (G) qui, lors du remplissage des corps (K ; K1 - K6), est partiellement entouré de ces derniers.

9. Dispositif (1) pour la fabrication d'une structure (12), comprenant un moule (2) doté d'une cavité (4) et des traversées (3) ménagées à travers une paroi (6) du moule, des ballons (B ; B1-B6) élastiques étant disposés dans la cavité (4) du moule (2) définissant la structure, en particulier pour la réalisation du procédé selon une ou plusieurs des revendications précédentes 1 à 8, la paroi (6) du moule (2) présentant au moins deux traversées (3) à travers lesquelles est respectivement introduit un col (16) d'un ballon (B ; B1-B6), **caractérisé en ce qu'**un tube d'aspiration (9a) conduit dans la cavité (4) du moule (2), tube auquel est raccordée une pompe (20) par le biais de laquelle un vide est produit.

10. Dispositif selon la revendication 9, **caractérisé en ce qu'**une peau extérieure (23) des ballons (B ; B1-B6) glisse sur au moins une paroi intérieure (24) du moule (2).

11. Dispositif selon une des revendications 9 ou 10, **caractérisé en ce que** la paroi intérieure (24) du moule (2) présente un revêtement doté d'un lubrifiant liquide ou semi-liquide.

12. Dispositif selon une des revendications 9 à 11, **caractérisé en ce que** la paroi intérieure (24) du moule (2) comprend un revêtement doté d'un matériau solide qui présente une faible valeur de friction par rapport à la peau extérieure (23) de ballons (B ; B1-B6).

13. Dispositif selon une des revendications précédentes 9 à 12, **caractérisé en ce qu'**à chaque fois une soupape (VT) est attribuée aux traversées (3) dans la paroi (6) du moule (2) et peut fermer le ballon (B ; B1-B6) qui est conduit à travers la traversée (3) respective, la soupape (VT) étant formée en particulier d'une gaine (8) supportée en rotation dans la paroi (6) du moule (2) et du col (16) du ballon (B ; B1-B6).

14. Dispositif selon une des revendications précédentes 9 à 13, **caractérisé en ce que** le dispositif (1) présente au moins un moyen de retenue (34) par lequel au moins un objet (G) peut être fixé dans la cavité (4) du moule (2), l'objet G pouvant en particulier être fixé sans contact par rapport à la paroi (6) du moule (2) dans la cavité (4), le moyen de retenue (34) étant en particulier formé par un fil (35), le fil (35) étant fixé sur la paroi (6) et sur l'objet (G), et le fil (35) étant en particulier extensible de façon élastique.
